# EUROPÄISCHE PATENTANMELDUNG

(11) **EP 4 398 059 A1**
(43) Veröffentlichungstag der Anmeldung: **10.07.2024**
(21) Anmeldenummer: 23216212.3
(22) Anmeldetag: 13.12.2023
(51) Int. Cl.: G05B 19/418, B65B 25/06, B65B 57/20, B26D 5/00, G05B 19/04

(54) **STEUERN EINES SLICERS BASIEREND AUF EINEM DURCHSATZ EINER NACHGEORDNETEN VERPACKUNGSMASCHINE**

(30) Priorität: 04.01.2023 DE 102023100131
(71) Anmelder: MULTIVAC Sepp Haggenmüller SE & Co. KG, 87787 Wolfertschwenden (DE)
(72) Erfinder: Moreno, André, 35236 Breidenbach (DE); Stachel, Tom, 87435 Kempten (DE)
(74) Vertreter: Weickmann & Weickmann PartmbB

(57) **Zusammenfassung**

Die Verpackungslinie (1) umfasst einen Slicer (3) zum Aufschneiden von zu verpackenden Produkten und eine dem Slicer (3) nachgeordnete Verpackungsmaschine (5) zum portionsweisen Verpacken der aufgeschnittenen Produkte. Die Verpackungslinie (1) umfasst eine Steuerung (39, 41, 45), welche dazu konfiguriert ist, eine Kenngröße zu empfangen, wobei die Kenngröße einen momentanen Produktdurchsatz der Verpackungsmaschine (5) oder eine momentane Durchsatzkapazität der Verpackungsmaschine (5) angibt. Die Steuerung (39, 41, 45) ist dazu konfiguriert, abhängig von der Kenngröße einen Betrieb des Slicers (3) zu steuern .

## Beschreibung

Die Erfindung betrifft eine Verpackungslinie mit einem Slicer zum Aufschneiden von zu verpackenden Produkten und mit einer Verpackungsmaschine zum Verpacken der aufgeschnittenen Produkte.

Zum Beispiel aus der DE 10 2018 204 031 A1 ist eine Verpackungslinie bekannt, bei der ein Slicer einem Förderbandsystem einer Tiefziehverpackungsmaschine Produkte zum Verpacken durch die Tiefziehverpackungsmaschine zuführt. Das Förderbandsystem umfasst ein Pufferbandmodul, welches als Vorpositionierer und Speicher einsetzbar ist, aus dem kontinuierlich Produkte weitertransportiert werden können.

Gemäß einem Aspekt der Erfindung wird eine Verpackungslinie bereitgestellt. Die Verpackungslinie umfasst einen Slicer und eine Verpackungsmaschine. Der Slicer ist zum Aufschneiden von zu verpackenden Produkten konfiguriert. Die Verpackungsmaschine ist zum portionsweisen Verpacken der aufgeschnittenen Produkte konfiguriert. Die Verpackungsmaschine ist dem Slicer nachgeordnet. Die Verpackungslinie umfasst eine Steuerung. Die Steuerung ist dazu konfiguriert, eine Kenngröße zu empfangen. Die Kenngröße gibt einen momentanen Produktdurchsatz der Verpackungsmaschine oder eine momentane Durchsatzkapazität der Verpackungsmaschine an. Die Steuerung ist dazu konfiguriert, abhängig von der Kenngröße einen Betrieb des Slicers zu steuern

Durch das Steuern des Betriebs des Slicers abhängig von der Kenngröße kann ein aufeinander abgestimmter Betrieb der Verpackungsmaschine und des Slicers vereinfacht werden. Die Steuerung kann dazu konfiguriert sein, den Slicer unter Berücksichtigung und/oder unter Einbeziehen der Kenngröße zu steuern. Die Steuerung kann dazu konfiguriert sein, einen oder mehrere Einstellparameter des Slicers abhängig von der Kenngröße einzustellen.

Die Steuerung kann dazu konfiguriert sein, die Kenngröße während eines Produktionslaufs der Verpackungslinie zu empfangen.

Die Steuerung kann dazu konfiguriert sein, die Kenngröße an mehreren zeitlich hintereinanderliegenden Übermittlungszeitpunkten zu empfangen. An zumindest einem oder an mehreren der Übermittlungszeitpunkte kann sich die Verpackungslinie in einem laufenden Arbeitsbetrieb befinden.

Die Steuerung kann dazu konfiguriert sein, die Kenngröße periodisch zu empfangen. Die Steuerung kann dazu konfiguriert sein, während eines laufenden Arbeitsbetriebs der Verpackungslinie die Kenngröße periodisch zu empfangen. Eine an der Steuerung vorliegende Information über den momentanen Produktdurchsatz der Verpackungsmaschine oder die momentane Durchsatzkapazität der Verpackungsmaschine kann periodisch aktualisiert werden. Eine Periodizität des Empfangens der Kenngröße durch die Steuerung kann beispielsweise in einem Bereich zwischen 1 Übermittlung pro Sekunde und 1 Übermittlung pro 5 Minuten, oder in einem Bereich zwischen 1 Übermittlung pro 5 Sekunden und 1 Übermittlung pro 2 Minuten, oder in einem Bereich zwischen 1 Übermittlung pro 20 Sekunden und 1 Übermittlung pro 1 Minute liegen.

Die Steuerung kann dazu konfiguriert sein, die Kenngröße in Reaktion auf zumindest ein vordefiniertes Ereignis zu empfangen. Das vordefinierte Ereignis kann beispielsweise eine Änderung eines oder mehrerer Betriebsparameter der Verpackungsmaschine umfassen. Das vordefinierte Ereignis kann beispielsweise das Empfangen einer Bedienereingabe an der Verpackungslinie oder an der Verpackungsmaschine umfassen. Das vordefinierte Ereignis kann ein manuelles Auslösen einer Übermittlung der Kenngröße umfassen. Das vordefinierte Ereignis kann das Erreichen einer bestimmten Anzahl von durch die Verpackungslinie ausgegebenen Verpackungen umfassen. Das vordefinierte Ereignis kann das Erreichen einer bestimmten Laufzeit der Verpackungslinie oder der Verpackungsmaschine umfassen.

Die Verpackungsmaschine oder eine Komponente der Verpackungsmaschine kann dazu konfiguriert sein, die Kenngröße an die Steuerung zu übermitteln. Die Steuerung kann dazu konfiguriert sein, die Kenngröße von der Verpackungsmaschine oder von einer Komponente der Verpackungsmaschine zu empfangen.

Die Steuerung kann dazu konfiguriert sein, anhand der Kenngröße, insbesondere in Abhängigkeit von der Kenngröße, einen Betrieb des Slicers anzupassen, insbesondere automatisch anzupassen. Die Steuerung kann dazu konfiguriert sein, anhand der Kenngröße, insbesondere in Abhängigkeit von der Kenngröße, zumindest einen Betriebsparameter des Slicers anzupassen oder einzustellen. Die Steuerung kann dazu konfiguriert sein, den zumindest einen Betriebsparameter in Reaktion auf ein Empfangen der Kenngröße anzupassen oder einzustellen. Die Steuerung kann dazu konfiguriert sein, den zumindest einen Betriebsparameter immer dann anzupassen oder einzustellen, wenn eine neue Kenngröße am der Steuerung. Ein Anpassen oder Einstellen des zumindest einen Betriebsparameters kann ein Verändern des Betriebsparameters umfassen. Das Anpassen oder Einstellen des zumindest einen Betriebsparameters muss nicht zwingend ein Verändern des Betriebsparameters umfassen. Insbesondere wenn sich die Kenngröße von einer zuletzt übermittelten Kenngröße nicht oder nur unwesentlich unterscheidet, kann sich das Anpassen oder Einstellen des zumindest einen Betriebsparameters darin erschöpfen, festzustellen, dass ein bereits eingestellter Wert des Betriebsparameters beibehalten werden soll.

Die Steuerung kann dazu konfiguriert sein, anhand der Kenngröße, insbesondere in Abhängigkeit von der Kenngröße, einen Produktdurchsatz des Slicers anzupassen. Die Steuerung kann dazu konfiguriert sein, anhand der Kenngröße einen Produktdurchsatz des Slicers an den momentanen Produktdurchsatz der Verpackungsmaschine oder an die momentane Durchsatzkapazität der Verpackungsmaschine anzugleichen. Durch ein Angleichen eines Produktdurchsatzes des Slicers an den momentanen Produktdurchsatz oder die momentane Durchsatzkapazität der Verpackungsmaschine kann ein kontinuierlicher und gleichmäßiger Betrieb der Verpackungslinie begünstigt werden. Wenn ein Produktdurchsatz des Slicers zumindest im Wesentlichen dem Produktdurchsatz der Verpackungsmaschine entspricht, kann ein Überversorgen oder Unterversorgen der Verpackungsmaschine durch den Slicer reduziert oder vermieden werden.

Das Anpassen des Produktdurchsatzes des Slicers kann durch das Anpassen oder Einstellen des zumindest einen Betriebsparameters des Slicers erfolgen. Die Steuerung kann dazu konfiguriert sein, den zumindest einen Betriebsparameter des Slicers anhand der Kenngröße derart anzupassen oder einzustellen, dass ein Produktdurchsatz des Slicers dem durch die Kenngröße repräsentierten momentanen Produktdurchsatz der Verpackungsmaschine oder der durch die Kenngröße repräsentierten momentanen Durchsatzkapazität der Verpackungsmaschine entspricht.

Die Steuerung kann dazu konfiguriert sein, den Slicer anzusteuern, seinen Produktdurchsatz durch ein Durchführen von Leerschnitten zu verringern. Insbesondere können Leerschnitte zwischen dem Aufschneiden aufeinanderfolgender Portionen durchgeführt werden. Durch das Durchführen von Leerschnitten lässt sich der Produktionsdurchsatz des Slicers bei gleichbleibender Drehzahl eines Schneidmessers des Slicers verringern.

Die Kenngröße kann derart konfiguriert sein, dass der momentane Produktdurchsatz der Verpackungsmaschine oder die momentane Durchsatzkapazität der Verpackungsmaschine aus der Kenngröße ermittelbar ist. Der momentane Produktdurchsatz oder die momentane Durchsatzkapazität der Verpackungsmaschine kann aus der Kenngröße allein ermittelbar sein. Der momentane Produktdurchsatz oder die momentane Durchsatzkapazität der Verpackungsmaschine kann aus der Kenngröße unter Hinzuziehen eines oder mehrerer bekannter Parameter ermittelbar sein. Die bekannten Parameter können beispielsweise eine Portionsgröße oder ein von der Verpackungsmaschine pro Produktionstakt verarbeitetes Format umfassen.

Der momentane Produktdurchsatz oder die momentane Durchsatzkapazität der Verpackungsmaschine kann beispielsweise in der Einheit Portionen pro Zeiteinheit, oder in der Einheit Verpackungen pro Zeiteinheit, oder in der Einheit Produktgewicht pro Zeiteinheit angebbar sein.

Die Verpackungslinie kann zumindest einen Sensor umfassen. Die Kenngröße kann basierend auf einem von dem zumindest einen Sensor gemessenen Messwert ermittelt werden. Der zumindest eine Sensor kann an der Verpackungsmaschine vorgesehen sein oder Teil der Verpackungsmaschine sein. Der zumindest eine Sensor kann stromaufwärts der Verpackungsmaschine oder stromabwärts der Verpackungsmaschine vorgesehen sein. Der zumindest eine Sensor kann dazu konfiguriert sein, von der Verpackungsmaschine ausgegebene Verpackungen zu zählen. Hierbei können beispielsweise nur mit Produkt befüllte Verpackungen gezählt werden, um einen Produktdurchsatz der Verpackungsmaschine zu ermitteln, oder sowohl unbefüllte als auch befüllte Verpackungen gezählt werden, um eine Durchsatzkapazität der Verpackungsmaschine zu ermitteln.

Der zumindest eine Sensor kann dazu konfiguriert sein, einen Arbeitstakt der Verpackungsmaschine zu ermitteln. Der Messwert des zumindest einen Sensors kann direkt die Kenngröße darstellen. Die Kenngröße kann basierend auf dem Messwert des Sensors berechnet werden.

Die Steuerung kann dazu konfiguriert sein, die Kenngröße von dem zumindest einen Sensor zu empfangen. Der zumindest eine Sensor kann dazu konfiguriert sein, die Kenngröße direkt oder indirekt an die Steuerung zu übermitteln.

Die Kenngröße kann aus zumindest einem Einstellwert der Verpackungsmaschine ermittelt werden. Der zumindest eine Einstellwert der Verpackungsmaschine kann zum Beispiel ein Arbeitstakt der Verpackungsmaschine sein. Der Einstellwert der Verpackungsmaschine kann direkt die Kenngröße darstellen. Die Kenngröße kann basierend auf dem zumindest einen Einstellwert der Verpackungsmaschine berechnet werden.

Die Verpackungslinie kann einen Puffer zur Aufnahme der aufgeschnittenen Produkte umfassen. Der Puffer kann zwischen dem Slicer und der Verpackungsmaschine vorgesehen sein. Der Puffer kann dazu konfiguriert sein, aufgeschnittenen Produkte von dem Slicer aufzunehmen und die Produkte an die Verpackungsmaschine abzugeben, insbesondere portionsweise abzugeben. Der Puffer kann dazu vorgesehen sein, kurzzeitige Unterschiede zwischen einer Produktionsrate des Slicers und einer Produktionsrate der Verpackungsmaschine zu überbrücken. Wenn kurzzeitig von dem Slicer keine oder nur wenige Produkte geliefert werden, beispielweise während eines Nachlegens von Produkten an einem Produkteingang des Slicers, kann die Verpackungsmaschine weiterhin aus dem Puffer versorgt werden, um einen kontinuierlichen Betrieb der Verpackungsmaschine zu ermöglichen. Wenn die Verpackungsmaschine kurzzeitig weniger Produkte abnimmt, beispielweise aufgrund eines zeitweise reduzierten Arbeitstakts der Verpackungsmaschine oder aufgrund eines Materialwechsels, insbesondere eines Folienwechsels, an der Verpackungsmaschine, kann der Puffer von dem Slicer bereitgestellte Produkte zeitweise aufnehmen, bis diese wieder von der Verpackungsmaschine abgenommen werden können.

Der Puffer kann eines oder mehrere Transportbänder umfassen. Der Puffer kann mehrere zwischen dem Slicer und der Verpackungsmaschine hintereinander angeordnete Transportbänder umfassen.

Der Slicer kann eine Slicersteuerung umfassen. Die Slicersteuerung kann einen Betrieb des Slicers zumindest teilweise steuern. Die Slicersteuerung kann einen oder mehrere Antriebe des Slicers steuern. Die Verpackungsmaschine kann eine Verpackungsmaschinensteuerung umfassen. Die Verpackungsmaschinensteuerung kann einen oder mehrere Antriebe der Verpackungsmaschine steuern.

Die Verpackungslinie kann eine Liniensteuerung umfassen. Die Liniensteuerung kann der Slicersteuerung und/oder der Verpackungsmaschinensteuerung übergeordnet sein. Die Liniensteuerung kann dem Slicer und/oder der Verpackungsmaschine übergeordnet sein.

Die Steuerung, welche die Kenngröße empfängt und abhängig von der Kenngröße einen Betrieb des Slicers steuert, kann die Verpackungsmaschinensteuerung oder die Slicersteuerung oder die Liniensteuerung sein oder diese umfassen. Die Steuerung kann den Slicer direkt oder indirekt steuern, insbesondere indirekt über die Liniensteuerung oder über die Slicersteuerung.

Es ist möglich, aber nicht notwendig, dass die Steuerung, welche die Kenngröße empfängt und abhängig von der Kenngröße einen Betrieb des Slicers steuert, den kompletten Betrieb des Slicers steuert. Beispielsweise kann die Steuerung, welche die Kenngröße empfängt und abhängig von der Kenngröße einen Betrieb des Slicers steuert, nur punktuell in einen ansonsten anderweitig gesteuerten Betrieb des Slicers eingreifen, um einen Betrieb des Slicers anhand der Kenngröße anzupassen.

Die Verpackungslinie kann eine Kommunikationseinrichtung umfassen. Die Kommunikationseinrichtung kann dazu konfiguriert sein, die Kenngröße an die Steuerung zu übermitteln. Die Kommunikationseinrichtung kann dazu konfiguriert sein, die Kenngröße von der Verpackungsmaschine oder von einer Komponente der Verpackungsmaschine oder von der Verpackungsmaschinensteuerung oder von dem Sensor an die Steuerung zu übermitteln.

Die Kommunikationseinrichtung kann ein Bussystem umfassen. Das Bussystem kann beispielsweise als CAN-Bussystem ausgebildet sein.

Die Kommunikationseinrichtung kann die Kenngröße mittels drahtgebundener Kommunikation oder mittels drahtloser Kommunikation an die Steuerung übermitteln.

Der momentane Produktdurchsatz der Verpackungsmaschine kann einer Produktmenge entsprechen, welche von der Verpackungsmaschine momentan pro Zeiteinheit umgesetzt wird.

Die momentane Durchsatzkapazität der Verpackungsmaschine kann einem Produktdurchsatz entsprechen, welchen die Verpackungsmaschine maximal in dem momentan vorliegenden Betriebszustand der Verpackungsmaschine umsetzen kann.

Der momentane Produktdurchsatz der Verpackungsmaschine kann der momentanen Durchsatzkapazität der Verpackungsmaschine entsprechen, beispielsweise wenn sämtliche die Verpackungsmaschine verlassenden Verpackungen mit einer Produktportion befüllt sind.

Die momentane Durchsatzkapazität der Verpackungsmaschine kann größer sein als der momentane Produktdurchsatz der Verpackungsmaschine, beispielsweise wenn die von der Verpackungsmaschine ausgegebenen Verpackungen nicht alle mit einer Produktportion befüllt sind. Dies kann zum Beispiel als Folge eines zu geringen Produktdurchsatzes des Slicers auftreten.

Zum Zeitpunkt der Übermittlung der Kenngröße an die Steuerung kann sich der durch die Kenngröße angegebene momentane Produktdurchsatz der Verpackungsmaschine oder die durch die Kenngröße angegebene momentane Durchsatzkapazität der Verpackungsmaschine bereits wieder verändert haben. Der momentane Produktdurchsatz oder die momentane Durchsatzkapazität der Verpackungsmaschine können somit strenggenommen zum Zeitpunkt der Übermittlung der Kenngröße an die Steuerung bereits veraltet sein, werden aber dennoch im Sinne der vorliegenden Offenbarung als "momentan" bezeichnet. Eine Zeitspanne zwischen einem tatsächlichen Vorliegen des momentanen Produktdurchsatzes oder der momentanen Durchsatzkapazität an der Verpackungsmaschine und einem Übermitteln der entsprechenden Kenngröße an die Steuerung kann beispielweise kleiner als 5 Minuten, oder kleiner als 3 Minuten, oder kleiner als 2 Minuten, oder kleiner als 1 Minute sein.

Bei den zu verpackenden Produkten kann es sich um Lebensmittelprodukte handeln, insbesondere um Wurstprodukte, oder um Fleischprodukte oder um Käseprodukte.

Der Slicer kann dazu konfiguriert sein, die zu verpackenden Produkte scheibenweise aufzuschneiden. Der Slicer kann dazu konfiguriert sein, die scheibenweise aufgeschnittenen Produkte portionsweise abzugeben. Eine Portion kann eine oder mehrere Produktscheiben umfassen. Die Produktscheiben einer Portion können von dem Slicer als Stapel oder als schindelartige Anordnung von Produktscheiben abgegeben werden.

Der Slicer kann ein rotierendes Messer zum Aufschneiden von Produkten umfassen. Der Slicer kann eine Produktzuführung umfassen, welche dazu konfiguriert ist, dem rotierenden Messer aufzuschneidendes Produkt zuzuführen.

Die Verpackungsmaschine kann dazu konfiguriert sein, die aufgeschnittenen Produkte portionsweise in Verpackungen zu verpacken. Die Verpackungen können beispielweise thermoformbares Material umfassen oder aus thermoformbarem Material bestehen. Die Verpackungsmaschine kann eine Einlegestrecke umfassen, in welcher die zu verpackenden Produkte portionsweise in Verpackungsschalen eingelegt werden. Die Verpackungsschalen können der Verpackungsmaschine vorgefertigt zugeführt werden oder in einer Formstation der Verpackungsmaschine durch Tiefziehen hergestellt werden. Die Verpackungsmaschine kann eine Siegelstation umfassen, in welcher die mit Produkt befüllten Verpackungsschalen verschlossen werden. In der Siegelstation können die Verpackungsschalen durch Ansiegeln einer Deckfolie verschlossen werden. Die Verpackungsmaschine, insbesondere die Siegelstation der Verpackungsmaschine, kann getaktet arbeiten. In einem Arbeitstakt kann jeweils eine Mehrzahl von Verpackungen (ein Format) gleichzeitig verpackt werden.

Gemäß einem weiteren Aspekt der Erfindung wird ein Verfahren zum Betrieb einer Verpackungslinie bereitgestellt. Zu verpackende Produkte werden mittels eines Slicers aufgeschnitten. Die aufgeschnittenen Produkte werden von dem Slicer zu einer Verpackungsmaschine transportiert. Die Produkte werden durch die Verpackungsmaschine portionsweise verpackt. Eine Kenngröße wird durch eine Steuerung empfangen. Die Kenngröße gibt einen momentanen Produktdurchsatz der Verpackungsmaschine oder eine momentane Durchsatzkapazität der Verpackungsmaschine an. Ein Produktdurchsatz des Slicers wird anhand der Kenngröße durch die Steuerung angepasst.

Das Übermitteln der Kenngröße an die Steuerung kann mittels einer Kommunikationseinrichtung der Verpackungslinie erfolgen.

Der Produktdurchsatz des Slicers kann anhand der Kenngröße an den momentanen Produktdurchsatz der Verpackungsmaschine oder an die momentane Durchsatzkapazität der Verpackungsmaschine angeglichen werden. Anhand der Kenngröße kann der Betrieb des Slicers so angepasst werden, dass die Verpackungsmaschine und der Slicer einen gleichen Produktdurchsatz aufweisen.

Das Anpassen des Produktdurchsatzes des Slicers kann durch ein Anpassen einer Anzahl von Leerschnitten des Slicers erfolgen. Insbesondere kann eine Anzahl von Leerschnitten angepasst werden, welche der Slicer jeweils zwischen dem Aufschneiden zweier aufeinanderfolgender Portionen durchführt.

Die Kenngröße kann basierend auf einem von zumindest einem Sensor gemessenen Messwert ermittelt werden.

Die Kenngröße kann eine über eine vordefinierte Zeitspanne gemittelte Größe sein. Die Kenngröße kann beispielsweise einen mittleren Produktionsdurchsatz der Verpackungsmaschine oder eine mittlere Durchsatzkapazität der Verpackungsmaschine über einen Mittelungszeitraum hinweg angeben. Der Mittelungszeitraum kann zwischen 10 Sekunden und 15 Minuten, oder zwischen 10 Sekunden und 10 Minuten, oder zwischen 10 Sekunden und 5 Minuten, oder zwischen 1 Minute und 5 Minuten, oder zwischen 1 Minute und 10 Minuten liegen.

Wie beschrieben, betrifft die Erfindung gemäß einem Aspekt eine Verpackungslinie und gemäß einem weiteren Aspekt ein Verfahren zum Betrieb einer Verpackungslinie. In Bezug auf die Verpackungslinie beschriebene Merkmale, Vorteile und Erläuterungen lassen sich auf das Verfahren übertragen. In Bezug auf das Verfahren beschriebene Merkmale, Vorteile und Erläuterungen lassen sich auf die Verpackungslinie übertragen. Das Verfahren kann anhand der Verpackungslinie durchgeführt werden. Die Verpackungslinie kann zum Durchführen des Verfahrens geeignet, ausgelegt und/oder konfiguriert sein.

Im Folgenden wird die Erfindung anhand eines Ausführungsbeispiels unter Bezugnahme auf die Figur weiter erläutert.

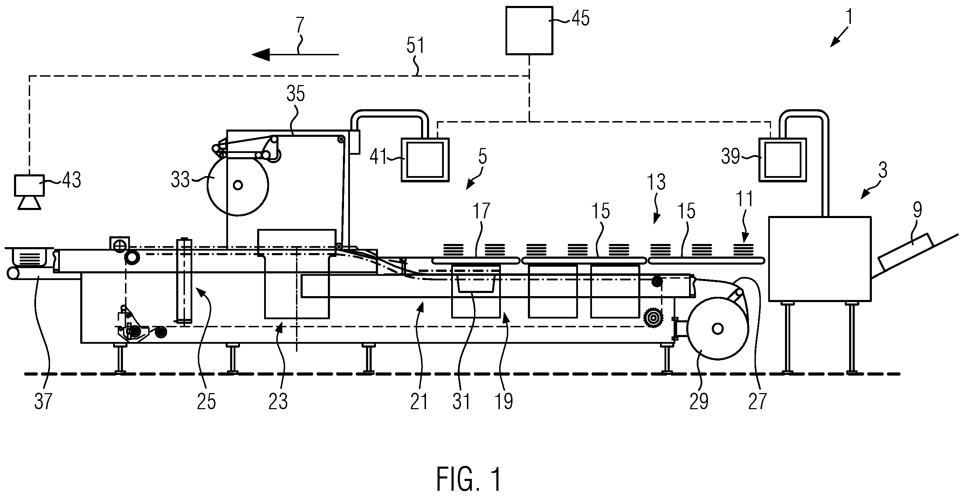

Fig. 1 zeigt eine schematische Seitenansicht einer Verpackungslinie gemäß einer Ausführungsform.

Die in Figur 1 dargestellte Verpackungslinie 1 umfasst einen Slicer 3 und eine Verpackungsmaschine 5, welche entlang einer Produktionsrichtung 7 hintereinander angeordnet sind. Dem Slicer 3 werden größere Produktstücke 9 zugeführt. Bei den Produktstücken 9 kann es sich um Wurst- oder Käseblöcke oder um Schinken- oder Fleischstücke handeln. Die Produktstücke 9 werden von dem Slicer 3 in Scheiben geschnitten und als Portionen 11 abgegeben. In der dargestellten Ausführungsform werden die Portionen 11 von dem Slicer 3 als Stapel von aufgeschnittenen Produktscheiben abgegeben. Alternativ können die Scheiben einer Portion 11 zum Beispiel schindelartig angeordnet sein. Die Portionen 11 werden von dem Slicer 3 zunächst an einen Puffer 13 abgegeben, welcher eine Hintereinanderanordnung mehrerer Förderbänder 15 umfasst. Die Förderbänder 15 sind vorzugsweise unabhängig voneinander antreibbar. Von dem Puffer 13 werden die Portionen 11 einem Einlegeband 17 der Verpackungsmaschine 5 übergeben.

In der dargestellten Ausführungsform ist die Verpackungsmaschine 5 als Tiefziehverpackungsmaschine ausgebildet. Die Verpackungsmaschine 5 umfasst entlang der Produktionsrichtung 7 hintereinander eine Formstation 19, eine Einlegestrecke 21, eine Siegelstation 23 und eine Schnittstation 25. Eine Folienbahn 27 wird stromaufwärts der Formstation 19 von einer Vorratsrolle 29 abgezogen und entlang der Produktionsrichtung 7 durch die Verpackungsmaschine 5 gefördert. In der Formstation 19 werden durch Tiefziehen Verpackungsmulden 31 in der Folienbahn 27 ausgeformt. In der Einlegestrecke 21 werden die Portionen 11 von dem Einlegeband 17 in die Verpackungsmulden 31 eingelegt. Die mit Produkt befüllten Verpackungsmulden 31 werden in der Siegelstation 23 durch Ansiegeln einer von einer Vorratsrolle 33 abgezogenen Deckfolie 35 an die Folienbahn 27 verschlossen. In der Schnittstation 25 werden die verschlossenen Verpackungen einzeln oder gruppenweise aus dem Folienverbund gelöst, insbesondere durch Durchtrennen der Folienbahn 27 und der Deckfolie 35. Stromabwärts der Verpackungsmaschine 5 ist ein Abführband 37 vorgesehen, welches die Verpackungen von der Verpackungsmaschine 5 wegfördert.

Der Slicer 3 umfasst eine Slicersteuerung 39, welche einen Betrieb des Slicers 3 steuert. Die Slicersteuerung 39 kann beispielweise einen Antrieb für ein Schneidmesser des Slicers 3 und einen Antrieb für einen Vorschub für die Produktblöcke 9 steuern. Die Verpackungsmaschine 5 umfasst eine Verpackungsmaschinensteuerung 41. Die Verpackungsmaschinensteuerung 41 steuert einen Betrieb der Verpackungsmaschine 5. Die Verpackungsmaschinensteuerung 41 steuert beispielweise den Betrieb der Formstation 19, den Betrieb der Siegelstation 23, und den Betrieb der Schnittstation 25.

Die Verpackungslinie 1 umfasst eine Liniensteuerung 45, welche der Slicersteuerung 39 und der Verpackungsmaschinensteuerung 41 übergeordnet ist.

Die Verpackungsmaschine 5 wird getaktet betrieben. In jedem Arbeitstakt erfolgt ein bestimmter Vorschub der Folienbahn 27 entlang der Produktionsrichtung 7. In jedem Arbeitstakt wird eine bestimmte Anzahl von Verpackungsschalen 31 in der Formstation 19 geformt. Gleichzeitig wird in jedem Arbeitstakt eine entsprechende Anzahl von Verpackungen in der Siegelstation 23 verschlossen. Die Anzahl der in einem Arbeitstakt in der Formstation 19 ausgeformten Verpackungsmulden 31 und die gleich große Anzahl der in einem Arbeitstakt in der Siegelstation 23 verschlossenen Verpackungen kann als Formatgröße bezeichnet werden.

Stromabwärts der Verpackungsmaschine 5 ist ein Sensor 43 vorgesehen. Der Sensor 43 zählt die Anzahl der die Verpackungsmaschine 5 verlassenden Verpackungen pro Zeiteinheit. Der Sensor 43 kann mit der Verpackungsmaschinensteuerung 41 41 verbunden sein.

Aus der Messung durch den Sensor 43 ergibt sich ein Kennwert, welcher einen momentanen Produktdurchsatz der Verpackungsmaschine 5 oder eine momentane Durchsatzkapazität der Verpackungsmaschine 5 angibt. Der Kennwert wird durch eine Kommunikationseinrichtung 51 an eine Steuerung 39, 41, 45 übertragen, insbesondere an die Slicersteuerung 39, oder an die Verpackungsmaschinensteuerung 41 oder an die Liniensteuerung 45. Die den Kennwert empfangende Steuerung 39, 41, 45 steuert den Slicer 3 anhand der Kenngröße so, dass der Produktdurchsatz des Slicers 3 an den von der Kenngröße repräsentierten momentanen Produktdurchsatz der Verpackungsmaschine 5 oder an die von der Kenngröße repräsentierte momentane Durchsatzkapazität der Verpackungsmaschine 5 angepasst wird.

Wenn sich anhand der Kenngröße ergibt, dass pro Zeiteinheit mehr Verpackungen die Verpackungsmaschine 5 verlassen als von dem Slicer 3 Portionen 11 bereitgestellt werden, kann die Steuerung 39, 41, 45 einen Produktdurchsatz des Slicers 3 entsprechend erhöhen. Hierzu kann beispielweise eine Anzahl von Leerschnitten, welche zwischen dem Aufschneiden von zwei aufeinander folgenden Portionen 11 durchgeführt wird, verringert werden.

Wenn sich aus der Kenngröße ergibt, dass der Slicer 3 pro Zeiteinheit mehr Portionen 11 bereitstellt werden als Verpackungen die Verpackungsmaschine 5 verlassen, kann die Steuerung 39, 41, 45 den Produktdurchsatz des Slicers 3 verringern. Zum Verringern des Produktdurchsatzes des Slicers 3 kann beispielsweise eine Anzahl von Leerschnitten erhöht werden, welche zwischen dem Aufschneiden zweier aufeinander folgender Portionen 11 durchgeführt werden.

In einer alternativen Ausführungsform kann der Sensor 43 weggelassen und die Kenngröße anderweitig bestimmt werden. Zum Beispiel kann die Kenngröße basierend auf einem Arbeitstakt und der bekannten Formatgröße der Verpackungsmaschine 5 ermittelt werden und mittels der Kommunikationseinrichtung 51 an die Steuerung 39, 41, 45 übertragen werden. Der Arbeitstakt der Verpackungsmaschine 5 kann beispielsweise aus einem oder mehreren Einstellwerten der Verpackungsmaschine 5 vorliegen.

## Patentansprüche

1. Verpackungslinie (1), umfassend:
einen Slicer (3) zum Aufschneiden von zu verpackenden Produkten; und
eine dem Slicer (3) nachgeordnete Verpackungsmaschine (5) zum portionsweisen Verpacken der aufgeschnittenen Produkte;
wobei die Verpackungslinie (1) eine Steuerung (39, 41, 45) umfasst, welche dazu konfiguriert ist, eine Kenngröße zu empfangen;
wobei die Kenngröße einen momentanen Produktdurchsatz der Verpackungsmaschine (5) oder eine momentane Durchsatzkapazität der Verpackungsmaschine (5) angibt; und
wobei die Steuerung (39, 41, 45) dazu konfiguriert ist, abhängig von der Kenngröße einen Betrieb des Slicers (3) zu steuern.

2. Verpackungslinie nach Anspruch 1, wobei die Steuerung (39, 41, 45) dazu konfiguriert ist, die Kenngröße periodisch zu empfangen.

3. Verpackungslinie nach Anspruch 1 oder 2, wobei die Steuerung (39, 41, 45) dazu konfiguriert ist, die Kenngröße in Reaktion auf zumindest ein vordefiniertes Ereignis zu empfangen.

4. Verpackungslinie nach einem der vorangehenden Ansprüche, wobei die Steuerung (39, 41, 45) dazu konfiguriert ist, anhand der Kenngröße einen Produktdurchsatz des Slicers (3) anzupassen, insbesondere an den momentanen Produktdurchsatz der Verpackungsmaschine (5) oder an die momentane Durchsatzkapazität der Verpackungsmaschine (5) anzugleichen.

5. Verpackungslinie nach einem der vorangehenden Ansprüche, wobei die Steuerung (39, 41, 45) dazu konfiguriert ist, den Slicer (3) anzusteuern, seinen Produktdurchsatz durch ein Durchführen von Leerschnitten zu verringern.

6. Verpackungslinie nach einem der vorangehenden Ansprüche, wobei die Verpackungslinie (1) zumindest einen Sensor (43) umfasst, wobei die Kenngröße basierend auf einem von dem zumindest einen Sensor (43) gemessenen Messwert ermittelt wird.

7. Verpackungslinie nach einem der vorangehenden Ansprüche, wobei die Kenngröße aus zumindest einem Einstellwert der Verpackungsmaschine (5) ermittelt wird.

8. Verpackungslinie nach einem der vorangehenden Ansprüche, wobei die Verpackungslinie (1) einen Puffer (13) zur Aufnahme der aufgeschnittenen Produkte umfasst, wobei der Puffer (13) zwischen dem Slicer (3) und der Verpackungsmaschine (5) vorgesehen ist.

9. Verpackungslinie nach einem der vorangehenden Ansprüche, wobei die Verpackungslinie (2) eine Kommunikationseinrichtung (51), insbesondere ein Bussystem, umfasst, wobei die Kommunikationseinrichtung (51) dazu konfiguriert ist, die Kenngröße an die Steuerung (39, 41, 45) zu übermitteln.

10. Verpackungslinie nach einem der vorangehenden Ansprüche, wobei die Steuerung (39, 41, 45) eine Verpackungsmaschinensteuerung (41) der Verpackungsmaschine (5), oder eine Slicersteuerung (39) des Slicers (3), oder eine der Verpackungsmaschine (5) und/oder dem Slicer (3) übergeordnete Liniensteuerung (45) ist.

11. Verfahren zum Betrieb einer Verpackungslinie (1), umfassend:
Aufschneiden von zu verpackenden Produkten mittels eines Slicers (3);
Transportieren der aufgeschnittenen Produkte von dem Slicer (3) zu einer Verpackungsmaschine (5);
portionsweises Verpacken der Produkte durch die Verpackungsmaschine (5);
Empfangen einer Kenngröße durch eine Steuerung (39, 41, 45), wobei die Kenngröße einen momentanen Produktdurchsatz der Verpackungsmaschine (5) oder eine momentane Durchsatzkapazität der Verpackungsmaschine (5) angibt; und
Anpassen eines Produktdurchsatzes des Slicers (3) anhand der Kenngröße durch die Steuerung (39, 41, 45).

12. Verfahren nach Anspruch 11, wobei der Produktdurchsatz des Slicers (3) anhand der Kenngröße an den momentanen Produktdurchsatz der Verpackungsmaschine (5) oder an die momentane Durchsatzkapazität der Verpackungsmaschine (5) angeglichen wird.

13. Verfahren nach Anspruch 11 oder 12, wobei das Anpassen des Produktdurchsatzes des Slicers (3) durch ein Anpassen einer Anzahl von Leerschnitten des Slicers (3) erfolgt.

14. Verfahren nach einem der Ansprüche 11 bis 13, wobei die Kenngröße basierend auf einem von zumindest einem Sensor (43) gemessenen Messwert ermittelt wird.

15. Verfahren nach einem der Ansprüche 11 bis 14, wobei die Kenngröße eine über eine vordefinierte Zeitspanne gemittelte Größe ist.
